# EUROPÄISCHE PATENTSCHRIFT

(11) **EP 3 673 181 B1**
(45) Veröffentlichungstag und Bekanntmachung des Hinweises auf die Patenterteilung: **14.09.2022**
(21) Anmeldenummer: 18740563.4
(22) Anmeldetag: 11.07.2018
(51) Int. Cl.: F16B 39/12, H02G 3/32, H02G 13/00, F16B 37/08, F16B 2/18, F16B 39/06

(54) **SCHNELLVERSCHRAUBUNG ZUM VERBINDEN VON MEHRTEILIGEN BAUGRUPPEN**
QUICK-RELEASE SCREW COUPLING FOR CONNECTING MULTI-PART ASSEMBLIES
SYSTÈME DE VISSAGE RAPIDE POUR L'ASSEMBLAGE DE MODULES EN PLUSIEURS PARTIES

(30) Priorität: 22.08.2017 DE 102017119204; 12.12.2017 DE 102017129644
(43) Veröffentlichungstag der Anmeldung: 01.07.2020
(73) Patentinhaber: DEHN SE, 92318 Neumarkt i.d. OPf. (DE)
(72) Erfinder: SEGER, Siegfried, 92364 Deining (DE)
(74) Vertreter: Prinz & Partner mbB
(86) Internationale Anmeldenummer: PCT/EP2018/068778
(87) Internationale Veröffentlichungsnummer: WO 2019/037938

(56) Entgegenhaltungen:
- EP-A1- 2 151 197
- DE-A1- 2 723 058
- DE-B4-102011 103 415
- DE-C- 642 951
- GB-A- 678 988
- US-A- 1 391 633
- US-A- 2 742 073
- US-A- 5 439 337

## Beschreibung

Die Erfindung betrifft eine Schnellverschraubung, insbesondere zum Verbinden von mehrteiligen Baugruppen, welche in unterschiedlichen Positionen zueinander fixierbar sind, insbesondere Baugruppen für elektrotechnische Einrichtungen oder Anwendungen, bestehend aus einem ersten Verbindungsteil, ausgebildet als Gewindestange oder Schraube, jeweils mit Außengewinde und einem zweiten Verbindungsteil, ausgebildet als Gegenstück oder Mutter, jeweils mit zum Außengewinde komplementären Innengewinde gemäß Patentanspruch 1.

US1391633 offenbart eine Schnellverschraubung nach dem Oberbegriff vom Anspruch 1.

Aus dem deutschen Gebrauchsmuster DE 93 16 867 U1 ist eine Befestigungslösung vorbekannt, mit der eine Sicherung eines auf einem Gewindebolzen zu haltenden Teiles unabhängig von der Länge des Gewindebolzens in kürzester Zeit unter Vermeidung aufwendigen Schraubens erreichbar ist.

Diesbezüglich sind zwei Taschen in Schraubrichtung hintereinander versetzt zueinander vorgesehen, die zudem an diagonal gegenüberliegenden Wandbereichen nur partiell umlaufendes Innengewinde besitzen, das heißt lediglich in Richtung der Mittellängsachse des Mutternkörpers aus diesen beiden für sich unvollkommenen Gewindeteilen entsteht ein im Zusammenwirken auf einem beide Taschen durchragenden Gewindebolzen vollständig wirkendes Gewinde und es ergibt sich die Möglichkeit, durch Verschwenken des Mutternkörpers diesen ohne Drehbewegungen über eine Gewindestange ohne Eingriff des Gewindes bis zum Anschlag an das zu haltende Teil zu schieben. Durch Zurückschwenken in eine koaxiale Position zum Gewindebolzen wird dann der gewünschte Gewindeeingriff erreicht.

Bekannt ist darüber hinaus ein Schnellspanner für Batterieklemmen gemäß DE 10 2006 020 754 A1. Der Schnellspanner weist einen Klemmkörper mit Klemmbacken auf. Die Klemmbacken sind durch ein Verschließen eines seitlich des Batteriepols verlaufenden Verschlusselementes und eines Gegenstückes aufeinander zu verstellbar und dadurch am Pol anklemmbar. Eine sichere Montage wird dadurch erreicht, dass ein Hebel schwenkbar um ein das Verschlusselement aufnehmendes, senkrecht zur Achse des Verschlusselementes angeordnetes Drehachsenelement angeordnet ist, und zwar derart, dass die Schwenkebene des Hebels im Wesentlichen parallel zur Achse des Verschlusselementes liegt.

Bei bekannten Klemm- und Verbindungsanordnungen für den äußeren Blitzschutz, beispielsweise nach DE 20 2014 000 454 U1 oder DE 10 2011 103 415 B4, wird von Klemmen ausgegangen, die eine Kontaktplatte aufweisen, welche von einem Überleger überfangen wird.

Derartige Überleger weisen Ausformungen zur Aufnahme von Leiterabschnitten auf und besitzen eine Auflagefläche mit einer Bohrung für eine Klemmenschraube oder einen Klemmenbolzen. Im Bereich der Bohrung kann darüber hinaus eine Prägung zur Schaffung einer Auflagefläche für ein Befestigungsmittel, insbesondere einer Mutter vorgesehen werden.

Nachdem die Leiterabschnitte in eine entsprechende Position zwischen Kontaktplatte und Überlieger gebracht wurden, erfolgt ein Anziehen der Schraubverbindung unter Nutzung üblicher oder für den betreffenden Anwendungsfall modifizierter Schrauben und Muttern, wobei in den meisten Fällen hierfür ein Werkzeug in Form eines Schraubenschlüssels oder eines Innensechskantschlüssels eingesetzt werden muss.

Die Nutzung des Kniehebelprinzips für Schnellspannklemmen, insbesondere zur Anbringung von chirurgischen Hilfsmitteln, wie Wundhaken oder peripherer Operationstechniken an ein Rahmensystem ist beispielsweise aus der EP 2 151 197 A1 bekannt. Eine solche bekannte Schnellspannklemme weist zwei mit einer zentralen Aufnahme für einen Zugbolzen versehene Klemmelemente auf, wobei das mit dem Rahmensystem zu verbindende Klemmelement zwei miteinander verbundene Schenkel aufweist. Das zweite Klemmelement ist als einteiliger Schenkel ausführbar, wobei der Gegenschenkel durch einen äußeren Oberflächenabschnitt eines der Schenkel des ersten Klemmteiles gebildet ist. Mit einer solchen Schnellspannklemme gelingt es zwar sehr einfach und ohne Werkzeug, eine Klemmverbindung zwischen zwei oder mehreren Teilen herbeizuführen, jedoch ist der Schnellspannweg außerordentlich begrenzt, so dass für jeden Anwendungsfall der Verbindung entsprechender chirurgischer Hilfsmittel eine Vielzahl von maßlich angepassten Schnellspannklemmen vorgehalten werden muss.

Die Befestigungsvorrichtung für Sanitärausstattungsgegenstände nach DE 42 10 682 A1 löst die Aufgabe, die Montage eines Rahmens auf einem Gestell in unbekanntem Abstand in einfacher Weise zu ermöglichen, wobei eine sichere und dauerhafte Befestigung zu gewährleisten ist.

Diesbezüglich werden Distanzbolzen, ausgeführt als Gewindestangen, verwendet, wobei die Gewindestangen zwei, sich gegenüberliegende, eben abgeflachte Seiten aufweisen. Das betreffende Halteelement verfügt über ein innenliegendes Gewinde zur Aufnahme des Distanzbolzens. Das Halteelement weist einen längsseitigen Schlitz auf, der nur geringfügig schmaler ist als die schmalste Seite des Distanzbolzens. Eine derartige Schnellbefestigung hat den Vorteil, dass, nachdem der Distanzbolzen des Verschlusselementes durch den Befestigungsrahmen hindurchgeführt wurde, der Distanzbolzen in das Halteelement hineinreicht und durch eine Drehung um die Längsachse des Verschlusselementes die an der Oberfläche des Distanzbolzens angeformten Eingriffszähne in die entsprechenden Gegenzähne in der Öffnung des Halteelementes eingreifen. Während des Drehvorganges soll sich durch die Spannvorrichtung eine Vorspannung am Verschlusselement einstellen, die ein selbständiges Lösen der Schnellbefestigung verhindert.

Die Eingriffszähne nach DE 42 10 682 A1 sollen nicht gewindeartig ausgebildet sein, da sich zwischen den betreffenden Abschnitten Freiräume befinden.

Um eine endgültige und sichere Befestigung zu bewerkstelligen ist eine Spannvorrichtung mit Auflager und Gegenlager vorhanden, bei der sowohl in dem Auflager als auch in dem Gegenlager mindestens jeweils zwei Spannzähne ausgebildet sind. Die Spannzähne weisen eine kurze Steilflanke, die nahezu axial verläuft, und eine lange Flachflanke auf, so dass sich eine sägezahn-ähnliche Struktur ergibt. Zum Arretieren ist dennoch ein erheblicher Kraftaufwand erforderlich, der regelmäßig nur unter Anwendung eines Werkzeuges aufgebracht werden kann, was gerade bei schwierigen Montagebedingungen und Umständen einen Nachteil darstellt.

Aus der EP 1 287 263 B1 ist eine Mutter vorbekannt, die sich schnell von einem Gewindeschaft abziehen lässt, ohne selbige um ihre Längsachse drehen zu müssen. Ein Verschieben eines dortigen Außenkörpers relativ zum Innenkörper bewegt vorhandene Backen radial auswärts.

Die vorbekannte Mutter besitzt demnach einen Außenkörper, der eine axiale Durchgangsöffnung aufweist und einen Innenkörper, der in der Durchgangsöffnung in axialer Richtung verschiebbar aufgenommen ist.

Der Innenkörper besitzt ein Innengewinde und ist in axialer Richtung in wenigstens zwei Backen geteilt, die jeweils an ihrer radial inneren Fläche ein Innengewindesegment tragen.

Führungsmittel, die am Außenkörper vorgesehen sind, wirken so zusammen, dass die Backen dann, wenn der Außenkörper relativ zum Innenkörper in Anzugsrichtung der Mutter verschoben wird, geschlossen werden.

Aus dem Vorgenannten ist es Aufgabe der Erfindung, eine weiterentwickelte Schnellspannverschraubung, zum Verbinden von mehrteiligen Baugruppen, welche in unterschiedlichen Positionen zueinander fixierbar sind, insbesondere Baugruppen für elektrotechnische Einrichtungen oder Anwendungen, anzugeben, welche einerseits eine schnelle Verbindung der Baugruppe oder Bauteile ermöglicht und andererseits es gestattet, die Verbindung werkzeuglos auszuführen.

Da diese verbindenden Bauteile oder Baugruppen je nach konkreter Anwendungssituation im unterschiedlichen Abstand zueinander, mit oder ohne Zwischenlagen oder weiteren Teilen fixiert werden müssen, wäre es vom Grundsatz her erforderlich, ausgehend von der gewünschten Schraubverbindung auf den Einsatzfall zu orientieren, welcher den größten zu überbrückenden Abstand der zu verbindenden Teile aufweist. Dies wiederum bedeutet, dass entweder ein sehr langwieriges und umständliches Schraubprocedere ausgeführt werden muss, wenn Teile im geringeren Abstand verschraubt werden müssen oder andererseits Schrauben, Bolzen oder Gewindestangen vor Ort gekürzt werden müssen. Derartige Arbeiten, insbesondere ein Kürzen einer Schraube, eines Bolzens oder einer Gewindestange ist unter Werkstattbedingungen sicherlich relativ einfach durchführbar, nicht jedoch dann, wenn auf einer Baustelle oder sonstigen erschwerten Bedingungen, zum Beispiel auf einem Hausdach, elektrische Anlagen oder Einrichtungen montiert oder angeschlossen werden müssen. Hierbei handelt es sich insbesondere um Einrichtungen für den äußeren Blitzschutz, die sich naturgemäß am höchsten Punkt eines Gebäudes oder einer Industrieanlage befinden.

Eine weitere Aufgabe der Erfindung besteht darin, dass zum Erreichen der notwendigen Kräfte zur Verbindung der Baugruppen, das heißt mit Blick auf den erforderlichen Kraftschluss auch dieser Kraftschluss ohne Nutzung von Werkzeugen erreicht werden kann.

Letztendlich soll die Schnellverschraubung auch die Nutzung von Schrauben, Gewindestangen, Bolzen oder Muttern ermöglichen, die ein sogenanntes verschlagendes Gewinde aufweisen. Unter verschlagenem Gewinde versteht man eine durch mechanischen Einfluss veränderte Gewindegeometrie, die dazu führt, dass ohne Nachschneiden des Gewindes eine Nutzung des entsprechenden Verbindungsmittels nicht mehr möglich ist.

Die Lösung der Aufgabe der Erfindung erfolgt durch eine Schnellverschraubung gemäß der Merkmalskombination nach Anspruch 1, wobei die Unteransprüche mindestens zweckmäßige Ausgestaltungen und Weiterbildungen darstellen.

Es wird demnach von einer Schnellverschraubung ausgegangen, die dem Verbinden von mehrteiligen Baugruppen dient, wobei diese Baugruppen in unterschiedlichen Positionen je nach Anwendung und Einsatzfall zueinander fixiert werden müssen. Hierbei kann es sich insbesondere um Baugruppen für elektrotechnische Einrichtungen oder Anwendungen handeln, ohne dass die Erfindung auf eine solche Anwendung beschränkt ist.

Die Schnellverschraubung besteht aus einem ersten Verbindungsteil, ausgebildet als Gewindestange, Gewindeschraube oder Gewindebolzen, jeweils mit einem Außengewinde und einem zweiten Verbindungsteil. Das zweite Verbindungsteil ist als Gegenstück, insbesondere als Mutter ausgebildet und weist jeweils ein zum Außengewinde komplementäres Innengewinde auf.

Erfindungsgemäß ist sowohl das Außengewinde als auch das Innengewinde an mindestens zwei gegenüberliegenden, in Schraubrichtung verlaufenden Längsseiten ausgeräumt oder abgeflacht, wobei sich die Ausräumung beim ersten Verbindungsteil mindestens über einen Längsseitenabschnitt, beginnend von einer Gewindespitze und beim zweiten Verbindungsteil über dessen gesamte Innengewindelänge oder Innengewindetiefe erstreckt.

Die derart ausgebildeten ersten und zweiten Verbindungsteile können in einer Position, wo sich die ausgeräumten Längsseiten quasi gegenüberliegen, zueinander axial verschoben und in eine solche Position verbracht werden, bei der eine Anlage zu den verbindenden Teilen erreicht wird. Wenn diese Position gegeben ist, wird durch eine Rotationsverdrehbewegung zwischen erstem und zweitem Verbindungsteil eine Lageverschiebung der Teile zueinander bewirkt, die dazu führt, dass die entsprechenden Abschnitte des Innen- und Außengewindes ineinander greifen, mit der Folge der Ausbildung einer klassischen kraftschlüssigen Gewindeverbindung.

Weiterhin erfindungsgemäß ist das Gegenstück oder die Mutter quer zur Schraubrichtung in mindestens ein erstes und ein zweites Mutterstück geteilt.

Das erste und das zweite Mutterstück verfügen über eine Außen-Innengewindepaarung und sind gegeneinander verdreh- und verspannbar.

Zum Erreichen eines schnellen Aufschiebens des Gegenstückes oder der Mutter auf eine Gewindestange oder Schraube werden das erste und das zweite Mutterstück in eine solche Position gebracht, dass die Ausräumungen oder abgeflachten Seiten der für die Verschraubung maßgeblichen Innengewinde fluchten. Nachdem eine gewünschte Endposition erreicht ist, werden die zwei Mutterstücke gegeneinander verdreht. Hierdurch verschiebt sich auch die Position der abgeflachten Bereiche und es kommt zu einer gewünschten kraftschlüssigen Verbindung.

Es liegt im Sinne der Erfindung, dass das Gegenstück oder die Mutter auch über mehrere, das heißt mehr als zwei in Schraubrichtung geteilte Mutterstücke verfügt, die gegeneinander verdrehbar sind, so dass trotz des ausgeräumten Innengewindes ausreichende Tragkräfte und Drehmomente aufgenommen werden können.

Im Bereich einer der Mutterstücke kann eine Ausnehmung in Querrichtung zum Einführen eines Spannhebels ausgebildet werden, um auch hier die Möglichkeit des Schnellspannens durch Verschwenken des Spannhebels zu bewerkstelligen.

In Weiterbildung der Erfindung kann eines der Mutterstücke mit einem Teil der mehrteiligen Baugruppe verbunden oder mit diesem Teil einteilig ausgeführt werden.

Erfindungsgemäß weisen die Mutterstücke jeweils einen in Längsrichtung ausgebildeten Schlitz zum seitlichen Aufstecken der Mutterstücke auf die jeweilige Gewindestange oder Schraube auf. Diesbezüglich kann bei komplizierten Einbaubedingungen ein noch leichteres Verschrauben erfolgen, da die Mutterstücke nicht in axialer Richtung über die Schraube bzw. Gewindestange geschoben werden müssen, sondern eine seitliche Zuführung möglich ist.

Ausgestaltend können das erste und das zweite Mutterstück mittels eines trenn- oder lösbaren Sicherungsmittels in einer solchen Lage zueinander fixiert werden, dass die ausgeräumten oder abgeflachten Seiten zunächst fluchten. Bei dieser Variante muss nicht zunächst händisch eine fluchtende Position der ausgeräumten Flächen in den Mutterstücken gesucht werden. Eine solche Position ist durch das Sicherungsmittel vorgegeben. Das Sicherungsmittel kann beispielsweise als Sicherungsstift oder aber auch durch ein stoffschlüssiges Verbindungsmittel realisiert werden. Das Sicherungsmittel dient hierbei lediglich der zeitweisen Lagefixierung der Mutterstücke gegeneinander und kann beim Ausführen der nachfolgenden Verdrehbewegung der Mutterstücke gegeneinander in leichter Weise gelöst werden. Ein entsprechendes stoffschlüssiges Verbindungsmittel, zum Beispiel in Form eines Klebers, wird durch die Verdrehbewegung der Mutterstücke gegeneinander gelöst. Ein Sicherungsstift kann bei der Verdrehbewegung zerbrochen werden.

Bei einer ersten Ausführungsform wird von Schrauben, Bolzen oder Gewindestangen mit ursprünglich kreisförmigem Querschnitt ausgegangen, wobei das entsprechende Außengewinde eingerollt oder geschnitten wird. Im Anschluss erfolgt ein Ausräumen des Gewindes, zum Beispiel durch Schleifen oder Fräsen. Denkbar ist jedoch auch als Gewindestange oder Bolzen von einem Vierkantstab auszugehen und diese nur an den Flanken mit einem Gewinde zu versehen, wobei dann entsprechend die Mutter oder das Gegenstück einen analogen Vierkantquerschnitt mit Flanken-Gewindesegmenten aufzuweisen hat.

In erfindungsgemäßer Weiterbildung weist das erste Verbindungsteil am oder im Schraubenkopf oder an dem in das zweite Verbindungsteil eintauchenden, gegenüberliegenden Ende der Gewindestange Mittel zum Schnellspannen in Form eines arretierbaren Hebels, insbesondere eines Kniehebels auf.

Diese Weiterbildung der Erfindung vervollkommnet die gewünschte werkzeuglose Handhabung beim Ausführen der Schnellverschraubung.

In einer diesbezüglichen Ausgestaltung weist der Schraubenkopf oder das Ende der Gewindestange mindestens eine Querbohrung auf, wobei in die Bohrung eine, mit dem vorerwähnten Hebel verbundene oder verbindbare Achse einsetzbar ist, welche eine Querschnittsfläche aufweist, die von der Querschnittsfläche der Bohrung abweicht.

Wenn beispielsweise der Bohrungsquerschnitt kreisförmig ist und der Querschnitt der Achse einem Halbkreis entspricht, kann durch eine Verschwenkbewegung des Hebels bzw. der Achse eine Klemmkraft zwischen den zu verbindenden Bauteilen, respektive der Schraubverbindung aufgebracht werden, so dass der gewünschte Kraftschluss entsteht.

Die Achse kann mindestens eine Ausnehmung oder eine Nase zum Fixieren des Hebels aufweisen. Der Hebel kann hierbei beispielsweise als U-förmiger Bügel oder aber auch als Hebel mit Abwinkelung ausgeführt werden.

Denkbar ist darüber hinaus, am Hebel oder an einem oder beiden Achsenenden eine Sollbruchstelle vorzusehen, derart, dass nach Ausführung der Schnellverschraubung und zusätzlicher Verspannung mittels des Hebels der Hebel oder außerhalb der Bohrung befindliche Achsenabschnitte entfernbar sind. Hierdurch kann in leichter Form eine Diebstahlsicherung geschaffen werden.

Bei einer weiteren Ausführungsform der Erfindung besteht die Möglichkeit, mindestens ein Ende der Achse mit einer konisch zulaufenden Spitze zu versehen oder keilförmig auszugestalten, um bereits beim Eintreiben oder Einsetzen der Achse eine weitere Kraftausübung auf die Schnellspannverbindung auszuüben.

Der Hebel oder die Achse können nach erfolgtem Schnellspannen in der erreichten Endlage fixiert werden. Hierfür kann zum Beispiel am verbindenden Bauteil eine Klaue oder ein Rasthaken ausgebildet werden, welcher ein entsprechendes Ende des Hebels umgreift, so dass auch bei dynamischen Belastungen ein ungewolltes Lösen der Schnellverschraubung wirksam verhinderbar ist.

Erfindungsgemäß ist insbesondere die Nutzung der vorgestellten Schnellverschraubung als Verbindungsmittel für eine Blitzschutz-, Erdungs- oder Potentialausgleichsklemme, wobei die entsprechende Klemme einen Überleger und eine Kontaktplatte besitzt und zwischen Überleger und Kontaktplatte Abschnitte elektrischer Leiter anordenbar sind und hierbei elektrische Leiter zur Anwendung und zum Einsatz kommen können, die einen völlig unterschiedlichen Querschnitt bzw. unterschiedliche Abmessungen in Querschnittsrichtung aufweisen. Unabhängig vom jeweiligen Leiter wird ein langwieriges und aufwändiges Hineindrehen einer Schraube oder Aufdrehen einer Mutter auf einen Gewindebolzen vermieden. Vielmehr kann in Verbindungsrichtung eine Steckbewegung mit anschließendem Verdrehen der geteilten Mutter vorgenommen werden.

Die Erfindung soll nachstehend anhand von Ausführungsbeispielen sowie unter Zuhilfenahme von Figuren näher erläutert werden.

Hierbei zeigen:

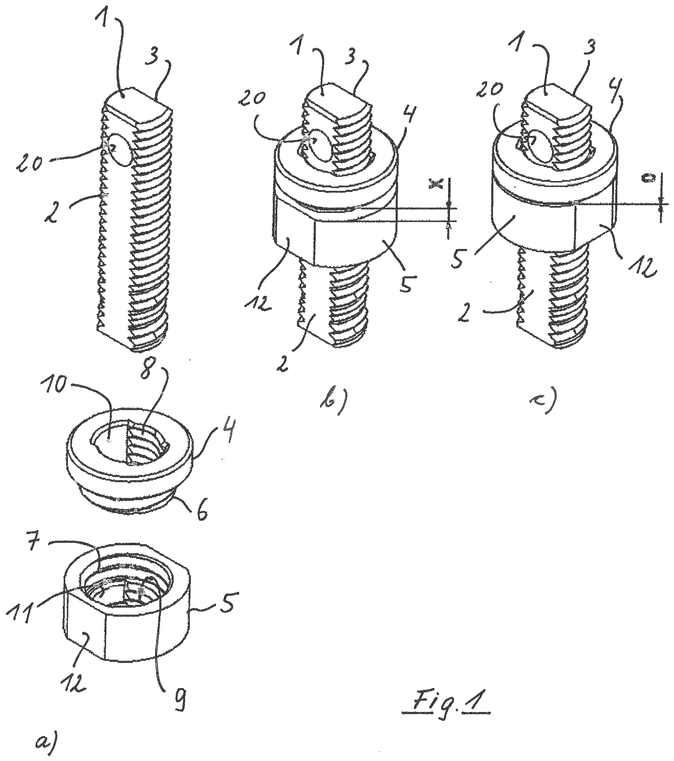

- Fig. 1: eine beispielhafte Darstellung einer Schnell-verschraubung mit erstem Verbindungsteil, ausgebildet als Gewindestange sowie zweitem Verbindungsteil in Form einer Mutter, die ein erstes und ein zweites Mutterstück aufweist in Einzelteildarstellung (Fig. 1a), in einer Darstellung mit aufgeschobenem zweiten Verbindungsteil in einer Aufschiebe- und Ausgangsposition (Fig. 1b) sowie in einer Darstellung mit verspannter Position des ersten und des zweiten Mutterstückes und entsprechender Befestigungslage des zweiten Verbindungsteils bezogen auf die Gewindestange (Fig. 1c); diese Schnellverschraubung wird durch die Ansprüche nicht abgedeckt;

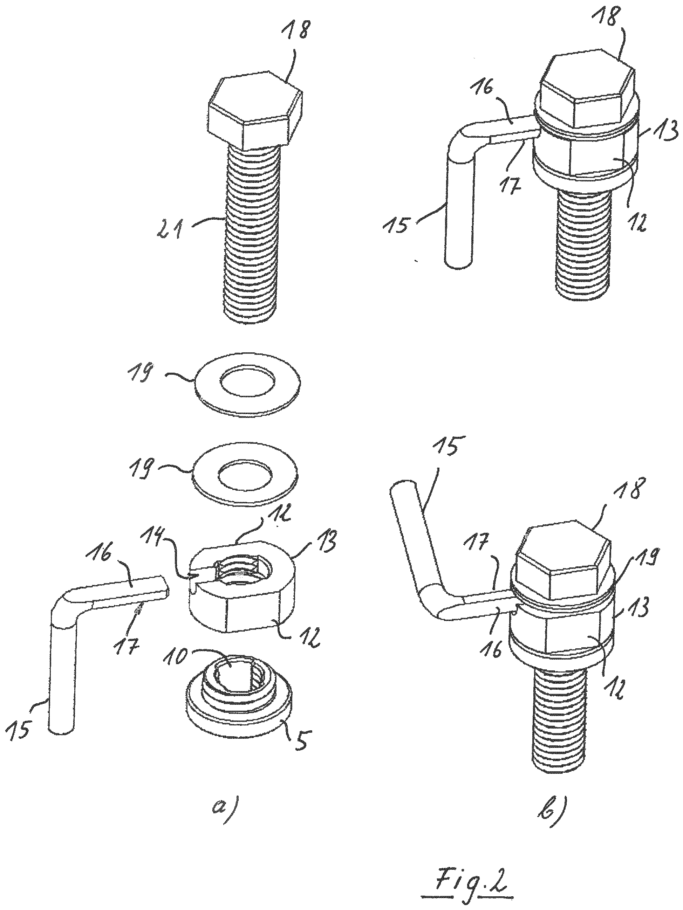

- Fig. 2: eine Explosivdarstellung einer Ausführungsform der Schnellverschraubung mit Spannhebel, welcher in eine seitliche Ausnehmung eines oberen Mutterstückes einführbar ist (Fig. 2a) sowie Darstellung der Schnellverschraubung in unverspannter und verspannter Position (Fig. 2b); diese Schnellverschraubung wird durch die Ansprüche nicht abgedeckt;

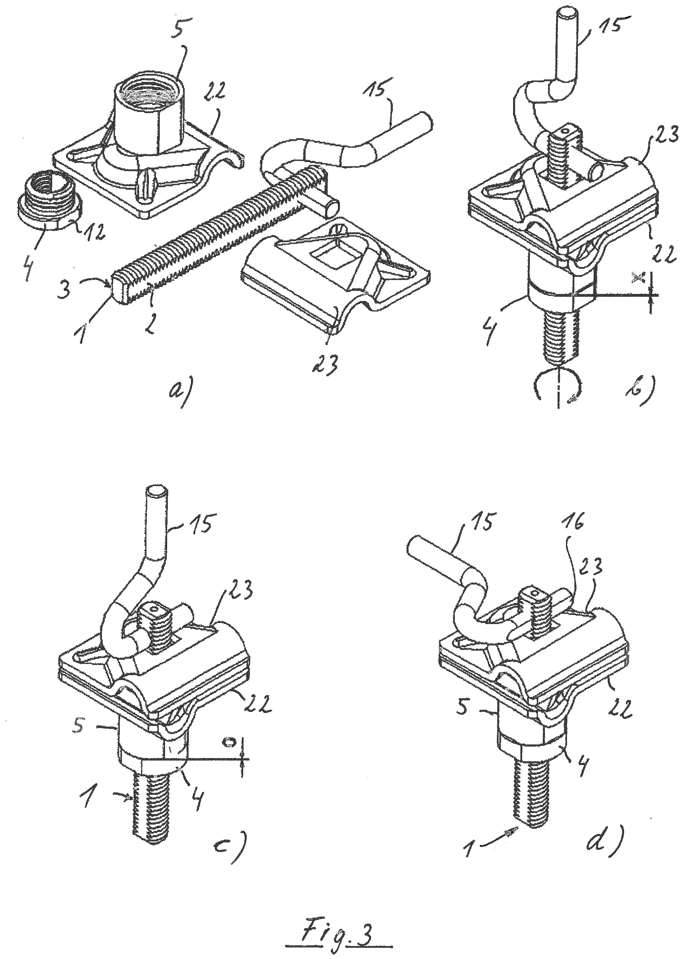

- Fig. 3a-d: ein Ausführungsbeispiel der Schnellverschraubung für eine Blitzschutz- oder Erdungsklemme, wobei ein Mutterstück mit einem Klemmenteil fest verbunden ist zur Benutzung des Schnellspannhebelprinzips mit einem in einen Durchbruch der Gewindestange eintauchenden Ende eines Schnellspannhebels; diese Schnellverschraubung wird durch die Ansprüche nicht abgedeckt;

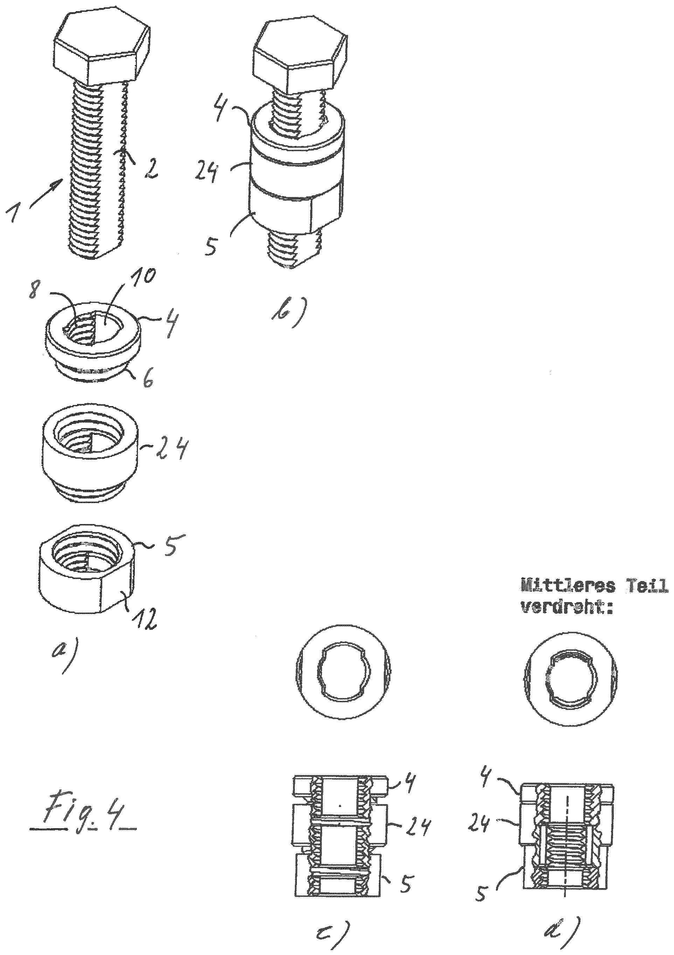

- Fig. 4a-d: Darstellungen einer beispielhaften dreiteiligen Ausbildung einer Mutter in einer Schraube mit einer Schraube mit gegenüberliegend abgeflachten oder ausgeräumten Längsseiten im Bereich des Schraubengewindes, wobei durch Verdrehung des in der Fig. 2a-d gezeigten mittleren Mutterstückes das gewünschte Verspannen und damit Fixieren des zweiten Verbindungsteiles auf der Schraube erfolgen kann; diese Schnellverschraubung wird durch die Ansprüche nicht abgedeckt;

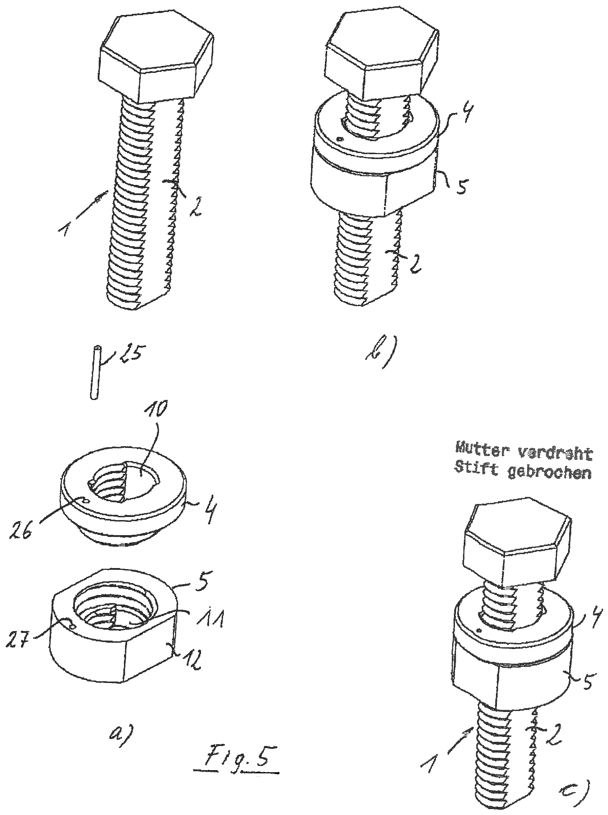

- Fig. 5a-c d: eine Darstellung ähnlich derjenigen nach Fig. 1, jedoch unter Nutzung einer Schraube als erstem Verbindungsteil sowie mit einem als Stift ausgebildeten Sicherungsmittel, um das erste und das zweite Mutterstück in einer solchen Lage zueinander fixiert zu halten, dass die ausgeräumten oder abgeflachten Seiten fluchten und somit ein leichtes Aufschieben des zweiten Verbindungsteiles, das heißt der geteilten Mutter, auf die Schraube möglich wird; iese Schnellverschraubung wird durch die Ansprüche nicht abgedeckt;

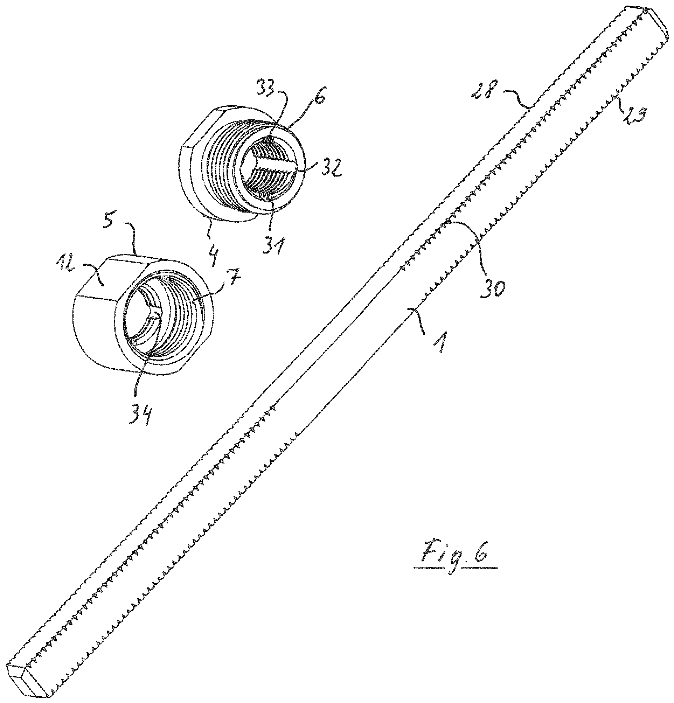

- Fig. 6: eine Ausführungsform, bei der sowohl das erste als auch das zweite Verbindungsteil vier Abflachungsseiten bezogen auf das Innen- und Außengewinde bzw. entsprechend der Ausräumungen aufweist; diese Schnellverschraubung wird durch die Ansprüche nicht abgedeckt;

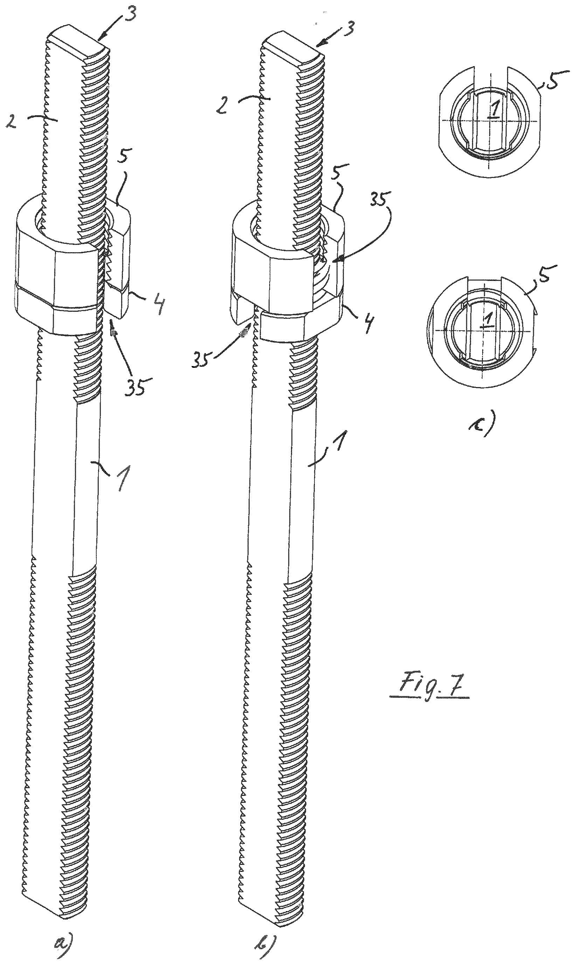

- Fig. 7a-c: Darstellungen einer Weiterbildung der Erfindung mit einer geteilten Mutter eines zweiten Verbindungsteiles, welches über seitliche Schlitze im ersten und zweiten Mutterstück verfügt, um ein seitliches Aufschieben auf eine Gewindestange zu bewerkstelligen;

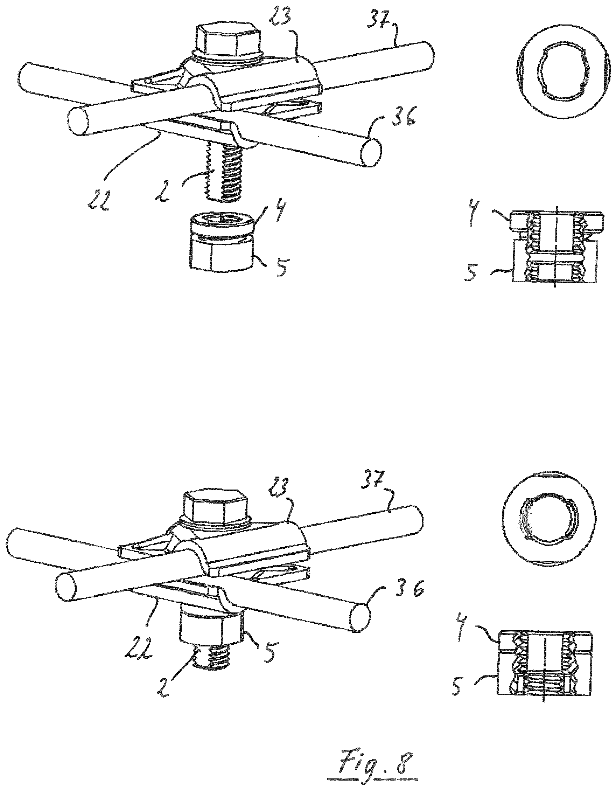

- Fig. 8: mehrere selbsterklärende Darstellungen der Anwendung einer Schnellverschraubung, beispielsweise analog derjenigen nach Fig. 5 in Verbindung mit einer Blitzschutz- oder Erdungsklemme; und

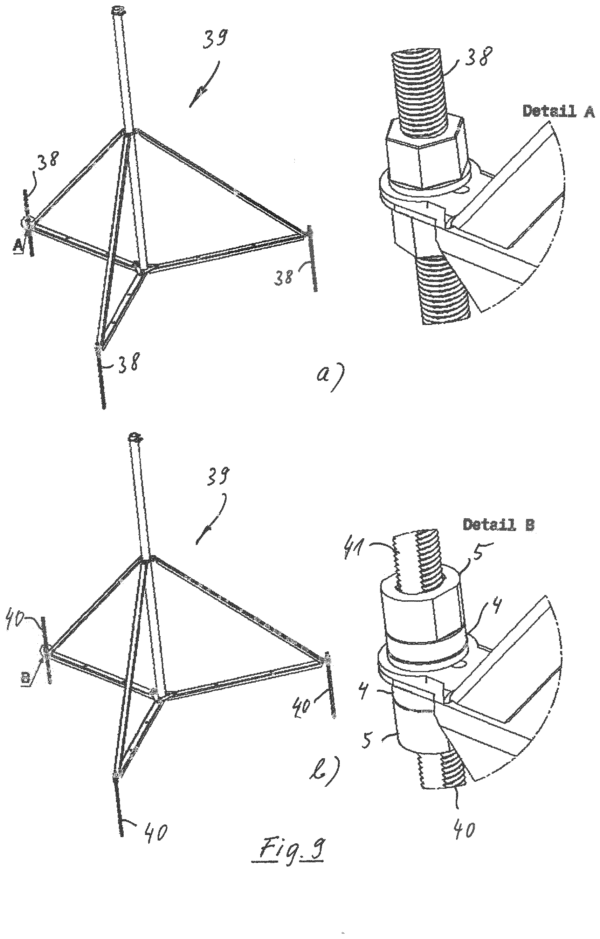

- Fig. 9a: eine Darstellung eines Dreibeins zur Aufnahme einer Blitzfangstange mit Verstellelementen, welche bei konventioneller Bauform mittels üblicher Mutter zum Zweck der Verstellung und zum Höhenausgleich einen erheblichen Arbeitsaufwand erfordern (Detail A) sowie gemäß Fig. 9b eine Darstellung unter Anwendung der erfindungsgemäßen Schnellverschraubung (Detail B).

Für gleiche oder gleichwirkende Bauteile oder Baugruppen werden in der nachfolgenden Beschreibung der Ausführungsbeispiele identische Bezugszeichen verwendet, auch wenn dies in der jeweiligen Figurenbeschreibung nicht nochmals erläutert wird.

Die Darstellung nach den Fig. 1a-c zeigt eine erste Ausführungsform der Schnellverschraubung, insbesondere zum Verbinden von mehrteiligen Baugruppen, die in unterschiedlichen Positionen zueinander fixierbar sind.

Hier kann es sich insbesondere um Baugruppen für elektrotechnische Einrichtungen oder Anwendungen handeln.

Ein erstes Verbindungsteil 1 ist beim gezeigten Beispiel als Gewindestange ausgeführt.

Diese Gewindestange 1 weist an zwei gegenüberliegenden, in Schraubrichtung verlaufenden Längsseiten Abflachungen 2; 3 auf.

Das zweite Verbindungsteil für die Schnellverschraubung besteht aus einer zweigeteilten Mutter mit einem ersten, oberen Mutterstück 4 und einem zweiten, unteren Mutterstück 5.

Das erste und das zweite Mutterstück 4; 5 sind über eine Gewindepaarung gegeneinander verdreh- und verspannbar.

Diesbezüglich weist das erste Mutterstück 4 einen Fortsatz mit Außengewinde 6 auf, wobei der Fortsatz mit Außengewinde 6 zu einem Innengewinde 7 im zweiten Mutterstück 5 kompatibel ist.

Das Basisinnengewinde 8 im ersten Mutterstück 4 sowie 9 im zweiten Mutterstück 5 ist prinzipiell analog wie das Gewinde der Gewindestange 1 ausgeräumt, und zwar in zwei gegenüberliegenden Bereichen 10 bzw. 11.

In der Fig. 1a ist aufgrund der perspektivischen Darstellung nur eine der jeweiligen Seiten 10; 11 sichtbar.

Montageseitig werden zunächst das erste und das zweite Mutterstück 4; 5 leicht miteinander verschraubt, und zwar unter Nutzung der Gewindepaarung 6; 7. Hierbei ist dafür Sorge getragen, dass die Ausräumungen 10; 11 fluchten, um ein leichtes Aufschieben auf die Gewindestange 1 zu bewerkstelligen. Der Zustand nach dem Aufschieben mit verbleibendem Abstand X zwischen erstem 4 und zweitem Mutterstück 5 ist in der Fig. 2b dargestellt.

Mit nachfolgendem Verdrehen des unteren Mutterstückes 5 unter Nutzung von Schlüsselflächen 12 wird die Mutter, das heißt das zweite Verbindungsteil bezogen auf das erste Verbindungsteil, nämlich die Gewindestange 1, verspannt und gesichert.

Die Gewindeabstimmung ist hierbei so gewählt, dass bei zweiseitig ausgeräumten Gewinden nach einer im Wesentlichen 90°-Drehung die Mutterhälften auf Block auflaufen.

Bei vierseitig ausgeräumten Gewinden (siehe Fig. 6) laufen die Mutterhälften nach einer 45°-Drehung auf Block. Solange in den Mutterstücken bzw.

Mutterhälften eine Gewindeüberdeckung vorhanden ist, die größer ist als die Abflachung der Gewindestange, greift die Verschraubung.

Mit Hilfe der Fig. 2a und 2b sei eine Ausführungsvariante illustriert, bei welcher in einem Mutterstück 13, das ansonsten analog dem Mutterstück 5 ausgebildet ist, eine seitliche Öffnung 14 realisiert wird, die der Aufnahme eines Spannhebels 15 dient.

Der Spannhebel 15 weist ein Ende mit einer Abflachung 16 auf einer Seite und einer im Querschnitt halbkreisförmigen Gestalt auf der der Abflachung 16 gegenüberliegenden Seite 17 auf.

Wird der Hebel 15 mit den Seiten 16 und 17 wie in der Fig. 2b (obere Abbildung) in die Ausnehmung 14 eingeführt und anschließend verschwenkt, wie dies die Fig. 2b zeigt, kann eine zusätzliche Spann- oder Klemmkraft auf die Verbindungsmittel zur Einwirkung gebracht werden. Um eine Krafteinwirkung durch den Spannhebel 15 unmittelbar auf den Schraubenkopf 18 zu vermeiden, sind Unterlegscheiben 19 vorgesehen.

Bei dieser Ausführungsform ist demnach der Spannhebel 15 nicht an der Gewindestange 1 fixiert (siehe Fig. 1 und dortige Bohrung 20 in der Gewindestange 1), sondern es befindet sich der Spannhebel an der Seite der zweiteiligen Mutter. Im Übrigen kann gemäß der Darstellung nach Fig. 2a und b die zweigeteilte Mutter 5; 13 auch mit einer Schraube mit Standardgewinde 21 kombiniert werden.

Die Fig. 3a-d zeigen einen beispielhaften Anwendungsfall der Schnellverschraubung für eine Blitzschutz-, Erdungs- oder Potentialausgleichsklemme.

Die Klemme weist eine Kontaktplatte 22 mit Überleger 23 auf.

Zwischen Kontaktplatte 22 und Überleger 23 kann unter Nutzung der Ausformungen ein elektrischer Leiter eingelegt und geklemmt werden, wie dies die Fig. 8 illustriert.

Bei der Darstellung gemäß Fig. 3a, welche die Einzelteile der Anordnung zeigt, wird wiederum von einer Gewindestange 1 ausgegangen, welche zwei abgeflachte, gewindefreie Seiten 2; 3 aufweist.

In die Ausnehmung 20 (siehe Fig. 1) ist ein Ende eines Spannhebels 15 eingeführt, der im Wesentlichen dem Spann- oder Kniehebel wie zur Fig. 2 erläutert, wirkungsseitig entspricht.

Die Kontaktplatte 22 weist anhand der Darstellung nach Fig. 3a ein mit ihr verbundenes Mutterstück 5 auf. Die Mutterstücke 4; 5 sind mittels Linksgewinde miteinander verschraubbar. Das Mutterteil 5 ist bereits fest mit der Kontaktplatte 22 verbunden, zum Beispiel verschweißt.

Im Ausgangszustand (Fig. 3b) befindet sich ein Spalt X zwischen den Mutterstücken 4; 5.

Die Gewindestange 1 wird von oben eingeschoben. Wenn die Gewindestange 1 danach im Uhrzeigersinn (Pfeildarstellung) gedreht wird, erfolgt eine Mitnahme des Mutterteiles 4, bis die Position nach Fig. 3c mit Abstand Null erreicht ist, das heißt der Spalt geschlossen ist.

Der Spalt ist dabei so gewählt, dass bei einem zweiteilig ausgeräumten Gewinde dieser nach einer ca. 90° Drehung geschlossen ist.

Der Spannhebel 15 ist so ausgeführt, dass dieser mit zwei Fingern geführt eine Drehung der Gewindestange ermöglicht.

Wenn der Hebel nach Drehung am Klemmenteil 23 anliegt (Darstellung nach Fig. 3c), wird die Kniehebelfunktion genutzt und der Spannhebel 15 umgelegt (siehe Position nach Fig. 3d).

Mit Hilfe der Fig. 4a-d soll dargelegt werden, dass das zweite Verbindungsteil auch aus mehreren, das heißt mehr als nur zwei Mutterstücken gebildet werden kann.

Im gezeigten Beispiel nach Fig. 4a und b bzw. in den Längsschnittdarstellungen nach den Fig. 4c und d (jeweils unterer Figurenteil) wird von drei Mutterstücken ausgegangen.

Ein oberes Mutterstück 4 und ein unteres Mutterstück 5 schließen ein mittleres Mutterstück 24 ein.

In der Ausgangslage gemäß den Darstellungen nach Fig. 4c (Längsschnitt und Draufsicht) wird die dreigeteilte Mutter auf die Schraube mit den Abflachungen 2 aufgeschoben. Wird dann das mittlere Mutterstück 24 verdreht (siehe Fig. 4d), ergibt sich die gewünschte Verspannung, wobei hier die Gewindepaarung 6; 7 wie anhand der Fig. 1 erläutert, gleich-oder gegenläufig zu wählen ist.

Das mittlere Mutterstück 24 kann auch so ausgebildet werden, dass das dortige Gewinde eine andere Steigung aufweist. Nach dem Aufstecken auf das abgeflachte Gewinde 2 und Verspannen durch das obere Mutterstück 4 kann dann das untere Mutterstück 5 mit der geänderten Steigung des mittleren Mutterstückes 24 verdreht werden. Hierdurch verspannt sich letzteres mit der Schraube und dem mittleren Mutterstück 24, so dass die Wirkung einer Schraubensicherung gegeben ist.

Mit Hilfe der Fig. 5a-c soll eine Möglichkeit der leichteren Handhabung der geteilten Mutter für die Schnellverschraubung erläutert werden.

Um die geteilte Mutter leicht auf die Schraube mit abgeflachten Gewinde 2 aufschieben zu können, ist die Lage der Ausräumungen 10 und 11 in den Mutterstücken 4 und 5 zueinander maßgeblich. Um hier keine manuelle Zuordnung der Mutterstück 4; 5 vor dem Aufschieben auf die Schraube mit abgeflachten Gewinde 2 vornehmen zu müssen, kann ein Sicherungsstift 25 zur Anwendung kommen, welcher mit seinen beiden Enden in komplementäre Öffnungen 26 und 27 auf den jeweiligen gegenüberliegenden Oberflächenseiten der Mutterstücke 4; 5 eintaucht. Eine eindeutige Lage der Mutterstücke 4; 5 wie in der Fig. 5b dargestellt, ist dadurch gewährleistet.

Mit Verdrehen der Mutterstücke 4; 5 gegeneinander bricht der Stift und es kommt zur gewünschten Schraubverbindung.

Anstelle eines Stiftes 25 kann auch eine lösbare stoffliche Verbindung, zum Beispiel durch einen Klebstoff genutzt werden.

Fig. 6 zeigt ein Beispiel einer Gewindestange auf der Basis eines Vierkantmaterials mit Gewindeabschnitten 28, 29, 30 an den Längskanten mit hierzu komplementären Ausräumungen 31, 32, 33 im Mutterstück 4 bzw. Ausräumungen 34 im Mutterstück 5.

Aufgrund der perspektivischen Darstellung der Mutterstücke 4; 5 gemäß Fig. 6 sind in selbigen nicht sämtliche der Ausräumungen erkennbar, die analog der Gewindeabschnitte in der Gewindestange 1 zu realisieren sind.

Die Darstellungen nach den Fig. 7a-c zeigen eine Weiterbildung der geteilten Mutter.

Bei den Darstellungen nach Fig. 7a und b wird wiederum von einer Gewindestange 1 ausgegangen, welche Abflachungen 2; 3 aufweist.

Die Mutterstücke 4; 5 sind wie beispielsweise zur Fig. 1 erläutert, ausgebildet, weisen jedoch einen in Längsrichtung verlaufenden Schlitz 35 auf.

In der Position wie in Fig. 7a dargestellt, kann daher das Gebilde aus ersten und zweiten Mutterstück 4; 5 seitlich auf die Gewindestange 1 aufgeschoben werden.

Danach erfolgt das Verspannen wie in der Fig. 7b in Perspektive dargestellt bzw. wie aus der Fig. 7c (untere Darstellung) für den Fachmann nachvollziehbar ist.

Die Fig. 8 und 9 sollen beispielhafte Anwendungen der Schnellverschraubung illustrieren.

Gemäß der Fig. 8 handelt es sich um eine Schnellverschraubung zum Verbinden von Leitern, zum Beispiel für den äußeren Blitzschutz, unter Nutzung einer zweiteiligen Klemme ähnlich der Darstellung nach Fig. 3 mit einer Kontaktplatte 22 und einem Überleger 23, deren bogenförmige Ausnehmungen den jeweiligen Leiter 36 bzw. 37 teilumfangsseitig umgreifen.

In Fig. 9 zeigt eine Teilansicht eines Dreibeins zum Aufnehmen einer Fangstange zum Befestigen dieser zum Beispiel auf einem Flachdach entsprechender Neigung.

Zum Neigungsausgleich ist es notwendig, die Beine 38 des Dreibeins 39 zu verstellen.

Bei herkömmlichen Muttern (siehe Detail A nach Fig. 9a) erfordert dies einen erheblichen Zeitaufwand, da die Muttern über die gesamte Länge des Gewindes des Beines 38 aufgebracht bzw. verstellt werden müssen.

Unter Nutzung der geteilten Mutter (siehe Detail B) sowie unter Rückgriff auf Beine 40 mit abgeflachten Gewinde 41 geht die Einstellung wesentlich schneller vonstatten.

Es versteht sich, dass die im Ausführungsbeispiel geschilderten Anwendungsmöglichkeiten für die erfindungsgemäße Lösung nicht einschränkend zu verstehen sind.

## Patentansprüche

1. Schnellverschraubung zum Verbinden von mehrteiligen Baugruppen, welche in unterschiedlichen Positionen zueinander fixierbar sind, insbesondere Baugruppen für elektrotechnische Einrichtungen oder Anwendungen, bestehend aus einem ersten Verbindungsteil, ausgebildet als Gewindestange oder Schraube (1), jeweils mit Außengewinde, und einem zweiten Verbindungsteil, ausgebildet als Gegenstück oder Mutter, jeweils mit zum Außengewinde komplementären Innengewinde, wobei sowohl das Außengewinde als auch das Innengewinde an mindestens zwei gegenüberliegenden, in Schraubrichtung verlaufenden Längsseiten (2; 3, 10; 11) ausgeräumt oder abgeflacht ist, weiterhin das Gegenstück oder die Mutter quer zur Schraubrichtung in mindestens ein erstes (4) und ein zweites (5) Mutterstück geteilt ist, wobei das erste und das zweite Mutterstück (4; 5) über eine Außen-/Innengewindepaarung (6; 7) gegeneinander verdreh- und verspannbar sind,
**dadurch gekennzeichnet, dass**
die Mutterstücke (4; 5) einen in Längsrichtung ausgebildeten Schlitz (35) zum seitlichen Aufstecken auf die jeweilige Gewindestange (1) oder Schraube aufweisen, derart, dass das Gebilde aus erstem und zweitem Mutterstück (4; 5) seitlich auf die Gewindestange aufschiebbar ist.

2. Schnellverschraubung nach Anspruch 1,
**dadurch gekennzeichnet, dass**
das erste Verbindungsteil (1) am oder im Schraubenkopf oder an dem in das zweite Verbindungsteil (4; 5) eintauchenden, gegenüberliegenden Ende die Gewindestange (1) Mittel zum Schnellspannen in Form eines arretierbaren Hebels (15), insbesondere eines Kniehebels aufweist.

3. Schnellverschraubung nach Anspruch 2,
**dadurch gekennzeichnet, dass**
der Schraubenkopf oder das Ende der Gewindestange (1) mindestens eine Querbohrung (20) aufweist, wobei in die Bohrung (20) eine, mit dem Hebel (15) verbundene oder verbindbare Achse einsetzbar ist, welche eine Querschnittsfläche besitzt, die von der Querschnittsfläche der Bohrung (20) abweicht.

4. Schnellverschraubung nach Anspruch 3,
**dadurch gekennzeichnet, dass**
der Bohrungsquerschnitt kreisförmig und der Achsenquerschnitt halbkreisförmig ausgebildet ist.

5. Schnellverschraubung nach einem der vorangegangenen Ansprüche, **dadurch gekennzeichnet, dass**
im Bereich einer der Mutterstücke (13) eine Ausnehmung (14) in Querrichtung zum Einführen eines Spannhebels (15) ausgebildet ist.

6. Schnellverschraubung nach einem der vorangegangenen Ansprüche, **dadurch gekennzeichnet, dass**
eines der Mutterstücke (5) mit einem Teil (22) der mehrteiligen Baugruppe verbunden oder mit diesem einstückig ausgeführt ist.

7. Schnellverschraubung nach einem der vorangegangenen Ansprüche, **dadurch gekennzeichnet, dass**
das erste (4) und das zweite (5) Mutterstück mittels eines trenn- oder lösbaren Sicherungsmittels (25) in einer solchen Lage zueinander fixiert sind, dass die ausgeräumten Gewindeabschnitte (10) zueinander fluchten.

8. Schnellverschraubung nach einem der vorangegangenen Ansprüche, **dadurch gekennzeichnet, dass**
diese als Verbindungsmittel für eine Blitzschutz-, Erdungs- oder Potentialausgleichsklemme ausgebildet ist, wobei die Klemme einen Überleger (23) und eine Kontaktplatte (22) besitzt und zwischen Überleger (23) und Kontaktplatte (22) Abschnitte elektrischer Leiter (36, 37) anordenbar sind.

## Claims

1. A quick-action screw coupling for connecting multi-part assemblies that can be fixed in place in different positions relative to one another, in particular assemblies for electrical engineering devices or applications, consisting of a first connecting part, configured as a threaded rod or a screw or bolt (1), each having an external thread, and a second connecting part, configured as a counter piece or a nut, each having an internal thread that is complementary to the external thread, wherein both the external thread and the internal thread are cleared or flattened on at least two opposing longitudinal sides (2; 3, 10; 11) extending in the screwing direction, wherein further the counter piece or the nut is split into at least a first (4) and a second (5) nut piece transversely to the screwing direction, wherein the first and second nut pieces (4; 5) can be rotated and clamped with respect to each other by means of an external/internal thread pair (6; 7),
**characterized in that**
the nut pieces (4; 5) each have a slot (35) formed in the longitudinal direction for lateral fitting onto the respective threaded rod (1) or screw, such that the structure consisting of the first and second nut pieces (4; 5) can be slid onto the threaded rod from the side.

2. The quick-action screw coupling according to claim 1,
**characterized in that**
the first connecting part (1) includes, at or in the screw head or at the opposite end of the threaded rod (1) penetrating into the second connecting part (4; 5), means for quick-action clamping in the form of a lockable lever (15), in particular a toggle lever.

3. The quick-action screw coupling according to claim 2,
**characterized in that**
the screw or bolt head or the end of the threaded rod (1) has at least one cross hole (20), wherein a pivot pin connected or connectable to the lever (15) can be inserted into the hole (20), the pivot pin having a cross-sectional area that deviates from the cross-sectional area of the hole (20).

4. The quick-action screw coupling according to claim 3,
**characterized in that**
the hole cross-section is formed to be circular and the pivot pin cross-section is formed to be semi-circular.

5. The quick-action screw coupling according to any of the preceding claims,
**characterized in that**
in the region of one of the nut pieces (13) a recess (14) is formed in the transverse direction for inserting a clamping lever (15).

6. The quick-action screw coupling according to any of the preceding claims,
**characterized in that**
one of the nut pieces (5) is connected to or integrally formed with a part (22) of the multi-part assembly.

7. The quick-action screw coupling according to any of the preceding claims,
**characterized in that**
the first (4) and second (5) nut pieces are fixed in place by means of a separable or releasable retaining means (25) in such a position relative to one another that the cleared thread sections (10) are aligned with one another.

8. The quick-action screw coupling according to any of the preceding claims,
**characterized in that**
it is configured as a connecting means for a lightning arrester terminal, a grounding terminal or an equipotential bonding terminal, wherein the terminal has a saddle clamp (23) and a contact plate (22), and sections of electrical conductors (36, 37) can be arranged between the saddle clamp (23) and the contact plate (22).

## Revendications

1. Assemblage vissé rapide pour le raccordement d'ensembles en plusieurs parties aptes à être fixés dans différentes positions les uns par rapport aux autres, en particulier d'ensembles pour des moyens ou des applications électrotechniques, composés d'une première partie de raccordement réalisée sous forme de tige filetée ou de vis (1) présentant respectivement un filetage, et d'une deuxième partie de raccordement réalisée sous forme de pièce antagoniste ou d'écrou présentant respectivement un taraudage complémentaire au filetage, le filetage et le taraudage étant déblayés ou aplatis sur au moins deux grands côtés (2 ; 3 ; 10 ; 11) opposés s'étendant dans le sens de vissage, la pièce antagoniste ou l'écrou étant divisé(e) transversalement au sens de vissage en au moins une première (4) et une deuxième pièce d'écrou (5), la première et la deuxième pièce d'écrou (4 ; 5) étant apte à être tournées et serrées l'une par rapport à l'autre par un appariement de filetage/taraudage (6 ; 7),
**caractérisé en ce que**
les pièces d'écrou (4 ; 5) présentent une fente (35) réalisée dans le sens longitudinal pour l'enfichage latéral sur la tige filetée (1) ou la vis respective, de telle sorte que la structure composée de la première et de la deuxième pièce d'écrou (4 ; 5) est apte à être glissée latéralement sur la tige filetée.

2. Assemblage vissé rapide selon la revendication 1,
**caractérisé en ce que**
la première pièce de raccordement (1) présente, sur ou dans la tête de vis ou sur l'extrémité de la tige filetée (1) opposée plongeant dans la deuxième pièce de raccordement (4 ; 5), des moyens à serrage rapide sous forme de levier verrouillable (15), en particulier de levier à genouillère.

3. Assemblage vissé rapide selon la revendication 2,
**caractérisé en ce que**
la tête de vis ou l'extrémité de la tige filetée (1) présente au moins un alésage transversal (20), un axe relié ou apte à être relié au levier (15) et présentant une surface de section transversale différente de la surface de section transversale de l'alésage (20) étant apte à être inséré dans l'alésage (20).

4. Assemblage vissé rapide selon la revendication 3,
**caractérisé en ce que**
la section transversale de l'alésage est réalisée circulaire et la section transversale de l'axe est réalisée semi-circulaire.

5. Assemblage vissé rapide selon l'une des revendications précédentes, **caractérisé en ce que**
un évidement (14) est réalisé dans le sens transversal dans la zone de l'une des pièces d'écrou (13) pour l'insertion d'un levier de serrage (15).

6. Assemblage vissé rapide selon l'une des revendications précédentes,
**caractérisé en ce que**
l'une des pièces d'écrou (5) est reliée à une partie (22) de l'ensemble en plusieurs parties ou est réalisée d'un seul tenant avec celle-ci.

7. Assemblage vissé rapide selon l'une des revendications précédentes,
**caractérisé en ce que**
la première (4) et la deuxième pièce d'écrou (5) sont fixées, par un moyen d'arrêt (25) séparable ou détachable, l'une par rapport à l'autre dans une position telle que les tronçons filetés (10) déblayés sont alignés les uns sur les autres.

8. Assemblage vissé rapide selon l'une des revendications précédentes,
**caractérisé en ce que**
celui-ci est réalisé sous forme de moyen de raccordement pour une borne de parafoudre, de mise à la terre ou d'équilibrage de potentiel, la borne présentant une bride de fixation (23) et une plaque de contact (22), et des tronçons de conducteurs électriques (36, 37) étant aptes à être agencés entre la bride de fixation (23) et la plaque de contact (22).
